# EUROPÄISCHE PATENTSCHRIFT

(11) **EP 2 507 676 B1**
(45) Veröffentlichungstag und Bekanntmachung des Hinweises auf die Patenterteilung: **13.03.2019**
(21) Anmeldenummer: 10782645.5
(22) Anmeldetag: 03.12.2010
(51) Int. Cl.: G06F 1/16

(54) **DOCKINGTERMINAL UND SYSTEM ZUR STEUERUNG VON FAHRZEUGFUNKTIONEN**
DOCKING TERMINAL AND SYSTEM FOR CONTROLLING VEHICLE FUNCTIONS
TERMINAL DE MISE À QUAI, ET SYSTÈME DE COMMANDE DE FONCTIONS DE VÉHICULE

(30) Priorität: 03.12.2009 DE 102009056786
(43) Veröffentlichungstag der Anmeldung: 10.10.2012
(73) Patentinhaber: Continental Automotive GmbH, 30165 Hannover (DE)
(72) Erfinder: JAUCH, Stefan, 78658 Zimmern (DE); ROMBACH, Gerhard, 78098 Triberg (DE)
(86) Internationale Anmeldenummer: PCT/EP2010/068889
(87) Internationale Veröffentlichungsnummer: WO 2011/067397

(56) Entgegenhaltungen:
- DE-A1-102007 038 690
- US-A1- 2007 038 434
- US-A1- 2008 168 205
- US-A1- 2009 285 000
- SILEX TECHNOLOGY: "wiDock wireless dock for iPod", 20060101, [Online] 1. Januar 2006 (2006-01-01), Seiten 1-2, XP007918004, Gefunden im Internet: URL:http://www.silexamerica.com/products/d ata_sheets/widock_datasheet.pdf> [gefunden am 2011-03-29]

## Beschreibung

Die Erfindung betrifft ein Dockingterminal zur Aufnahme von mobilen Endgeräten, zur Kommunikation mit mobilen Endgeräten und zur Steuerung einer Mehrzahl von Fahrzeugfunktionen über ein mit dem Fahrzeug verbundenes Steuergerät, mit einer Eingabevorrichtung, Mitteln zum drahtlosen Datenaustausch und einem Energiespeicher, sowie ein System zur mobilen Ansteuerung von Fahrzeugfunktionen mit einem Steuergerät und einem Dockingterminal.

Aus der EP 1 150 098 A1 ist ein Fahrzeugnavigationssystem bekannt mit mehreren Einheiten, die miteinander gekoppelt sind. Die Einheiten umfassen eine Ein-/Ausgabe-Einheit, eine Routenplanungseinheit und eine Positionsbestimmungseinheit. Das Navigationssystem ist ausgebildet zum Bestimmen einer Route zwischen einem Ausgangspunkt und einem Zielpunkt unter Berücksichtigung von möglichen Zwischenzielen, die beispielsweise Hotels, oder auch Verkehrsinformationen, die beispielsweise über das Radio Data System (RDS) abgefragt werden können. Ferner umfasst das Navigationssystem auch eine Datenbank mit Daten über die Entfernungen zwischen vorgegebenen Streckenabschnitten, deren zugeordnete voraussichtliche Fahrzeitdauer und eine Straßenklassifikation Darüber hinaus umfasst das Navigationssystem noch einen Logbuchcomputer, in dem Zeitpläne aus der Vergangenheit, aufgelaufene Rechnungen oder sonstige Kosten gespeichert sind. Abhängig von den Informationen in der Datenbank, in dem Logbuchcomputer und auch abhängig von dem RDS-System ist das Navigationssystem ausgebildet zum Ermitteln der jeweiligen Route von dem Ausgangspunkt zu dem Zielpunkt. Die einzelnen Komponenten des Navigationssystems können über Bluetooth-Schnittstellen oder auch über GSM-Schnittstellen miteinander gekoppelt sein.

Aus US 2007/038434 ist ein Fahrzeugsystem bekannt, das ein fahrzeugmontiertes elektronisches Gerät mit Benutzer- und Geräteschnittstellen, ein elektronisches Medienspeichergerät mit physikalischen Benutzer- und Geräteschnittstellen und einen Signalprozessor umfasst. Der Signalprozessor ist zwischen der fahrzeugmontierten elektronischen Vorrichtung und der elektronischen Medienspeichervorrichtung angeordnet. Die Vorrichtungen sind miteinander verbunden und die fahrzeugmontierte elektronische Vorrichtung ist konfiguriert, um zumindest einen Teil der Benutzerschnittstellendaten der elektronischen Medienspeichervorrichtung anzuzeigen und einen Teil der Funktionalität der elektronischen Medienspeichervorrichtung zu emulieren.

In DE 10 2007 038690 wird ein Tachograph, der fahrer- und /oder fahrzeugbezogene Daten digital in einem internen Speicher speichert und eine Schnittstelle zur Übertragung der Daten an externe Geräte aufweist, vorgeschlagen, bei dem die Schnittstelle eine an der Frontblende des Tachographen frei zugänglich eingerichtete Schnittstelle ist, die für eine Übertragung von Authentisierungs-Daten und für eine davon abhängige Übertragung der Daten eingerichtet ist. Ebenso werden eine damit ausgestattete Anordnung und ein damit durchgeführtes Verfahren zur Daten-Übertragung, insbesondere zum Daten-Download per Daten-Fernabfrage, vorgeschlagen. Bevorzugt ist die Schnittstelle für eine Übertragung der Authentisierungs-Daten und der fahrer- und/oder fahrzeugbezogenen Daten nach einem normierten Daten-Fernabfrage-Protokoll, insbesondere dem sog. Remote Download Protocol (RDP), eingerichtet, wodurch die entsprechenden Funktionalitäten in benutzerfreundlicher Art und Weise über die Schnittstelle an der Gerätevorderseite des Tachographen leicht und direkt zugänglich gemacht werden.

Aus dem englischen Abstract JP 2003-130669-A ist ebenfalls ein Navigationssystem für Fahrzeuge bekannt, das eine Routenplanungs- und Verarbeitungseinheit und eine Alternativroutenberechnungseinheit umfasst. Die Routenplanungs- und Verarbeitungseinheit ist ausgebildet zum Ermitteln einer Route hin zu einer eingestellten Zielposition. Sie ist ferner ausgebildet zum Zuordnen von Routeninformation basierend auf Kosten, die den jeweiligen Streckenabschnitten der jeweiligen Route zugeordnet sind. Derartige Kosten sind als Autobahn oder Mautstraße offenbart.

In der DE 19640735 wird ein Telematikgerät vorgeschlagen, in dem ein Autoradio mit einem RDS-Modul, ein Funktelefon, ein Ortungs- und Navigationssystem in einem Gehäuse angeordnet sind. Das Gehäuse ist derart ausgelegt, dass es in den genormten Schacht am Armaturenbrett eines Kraftfahrzeugs einbaubar ist. Mit Hilfe des Telematikgerätes können sowohl allgemein betreffende Informationen via des Autoradios, als auch individuelle Informationen über das GSM-Modul empfangen werden. Des Weiteren können Daten beispielsweise über die Fahrzeugposition, ein Zielwunsch oder ein Notruf an die Zentrale gesendet werden. Die Zentrale berechnet eine oder mehrere Zielrouten und sendet diese an das Telematikgerät zurück. Im Falle eines Unfalls oder einer Autopanne wird ein entsprechender Notruf gesendet und Hilfe herbeigeholt.

Um die Sicherheit individuelle Mobilität weiter zu verbessern ist es nötig neben den Informationsquellen, die in ein Fahrzeug einzubauen sind, auch externe Informationsquellen zu nutzen. Hierdurch kann ein umfassenderes Bild des Umfeldes gewonnen werden, da Sichtbehinderungen nicht stören und umfassendere Informationen ausgetauscht werden können. Mobilfunktechnologie im Zusammenspiel mit weiteren Verfahren ermöglicht den Informationsaustausch von Fahrzeug zu Fahrzeug und Fahrzeug zu Infrastruktur.

Aktuelle Lösungen besitzen keine zentrale, mobile und drahtlose Kommunikationsplattform im Fahrzeug zur mobilen Anzeige, mobile Ein-Ausgabe, Steuerung oder uni-/bidirektionalen Kommunikation. Insbesondere bei sensiblen Fahrzeug- oder Fahrerdaten sind ein Zugriffschutz und eine Firewall zum Schutz des Fahrzeuges und Fahrer wichtig. Momentane Systeme sind Einzellösungen, welche nur spezielle Daten aus z. B. dem Tachographenbereich herunterladen können, wie z. B. über den Downloadkey oder Download-Device.

Insbesondere zusätzliche Sicherheitsmerkmale, je nach Ausprägung abhängig von dem erforderlichen Sicherheitslevel, sind wesentliche Bestandteile eines solchen vorgenannten Systemkonzepts für ein mobiles Dockingterminal.

Neben dem Informationsaustausch über kurze Distanzen ist zusätzlich auch immer ein Datenaustausch mit Zentraler Infrastruktur erforderlich, um z. B. Notrufe absetzen zu können oder um z.B. gestohlene Fahrzeuge wieder zu finden. Hierzu werden üblicherweise Funktelefonmodule (GSM/UMTS) und Satelliten-Positionie-rungssysteme (GPS/Galileo) verwendet.

Nach dem Stand der Technik sind bereits mobile Endgeräte zur Steuerung von Fahrzeugfunktionen bekannt. Diese weisen jedoch einen relativ kleinen Funktionsumfang auf und beschränken sich üblicherweise auf Komfortfunktionen des Fahrzeugs.

Eine solche Beschränkung ist unvorteilhaft, da auch das Bedürfnis besteht weitere Funktionen, wie das Abrufen von sicherheitsrelevanten Fahrzeugfunktionen, fernzusteuern.

Besonders unvorteilhaft ist eine Beschränkung auf Komfortfunktionen im Nutzfahrzeugmarkt, denn mit mobilen Endgeräten nach dem Stand der Technik können keine Fahrzeugfunktionen gesteuert werden.

Für einige Fahrzeugfunktionen sind zwar auch Fernsteuerungen bekannt, hierbei handelt es sich jedoch um Einzellösungen, welche zur Steuerung von genau einer bestimmten Funktion geeignet sind.

Die Aufgabe der Erfindung besteht daher darin, ein Dockingterminal sowie ein System zur mobilen Ansteuerung von Fahrzeugfunktionen anzugeben, welches einen vergrößerten Funktionsumfang aufweist.

Erfindungsgemäß wird die Aufgabe durch ein Dockingterminal nach Anspruch 1 und ein System nach Anspruch 7 gelöst. Vorteilhafte Weiterbildungen werden in den abhängigen Ansprüchen genannt.

Dadurch, dass die Mittel zum drahtlosen Datenaustausch mit einer integrierten Datenverarbeitungseinheit verbunden und in einem Dockingterminal integriert sind, kann über das Dockingterminal direkt oder indirekt auch über ein angeschlossenes mobiles Endgerät, welche zur Anwendung mindestens eines kryptologischen Verfahrens ausgebildet ist, mehr Fahrzeugfunktionen fernsteuern, da auch Funktionen gesteuert werden können, welche nach dem Stand der Technik aus Sicherheitsgrünen nur über eine kabelgebundene Ansteuerung oder über eine separate Fernbedienung gesteuert werden konnten. Unter angeschlossen ist zu verstehen, das mobile Endgeräte steckbar in das Dockingterminal eingeführt werden kann oder dass mobile Endgeräte über eine Nahbereichskommunikationsverbindung, wie Bluetooth, mit dem Dockingterminal angeschlossen ist bzw. mobil verbunden.

Die Vorteile einer solchen Herangehensweise sind, eine einfache mechanische Adaption für die anzubindenden mobilen Endgeräte im Fahrzeug. Des Weiteren wird vorteilhaft eine elektrische Versorgung und die Bereitstellung von automotive Daten- und Kommunikationsverbindung von mobilen Kommunikationsgeräten im Fahrzeug umgesetzt.

Durch den bereits genannten Ansatz kann ein flexibles und funktionelles Design für ein zentrales und mobiles Dockingterminal, insbesondere bei Nutzfahrzeugen, realisiert werden. Es wird hierdurch ermöglicht, dass ein Mitführen und Nutzen z.B. eines I-Pads innerhalb des Fahrzeuges zur Kommunikation mit dem Fahrzeug und außerhalb des Fahrzeuges zur Datenaufnahme/abgabe in der Spedition durchführbar ist.

Durch das erfindungsgemäße Dockingterminal erfolgt eine Integration von Consumerprodukten wie z.B. Smartphones oder I-Pads in die Automotivewelt. Hierdurch kann eine Verwendung von HMI-Funktionalität von günstigen mobilen Kommunikationsgeräten übernommen werden. Es können die neuester Technologie durch den Einsatz aktueller Kommunikations-Endgeräte zum Einsatz kommen. Durch die Verwendung von Fahrzeug-/Fahrerdaten mit GPS und GSM-Funktionen können Synergie-Effekte erzielt werden und neue integrierte Funktionen generiert werden.

Durch die Verfügungsstellung von Dateninhalte und Steuerkommandos z. B. für Tachographen wie Ausdruck, kumulierte Lenkzeiten, Datenkommunikation mit internen Steuergeräten wie z.B. Kühlaggregate mit Angabe der Warenangabe von der Spedition können Verbesserungen und eine bessere logistischer Einsatz von Fahrzeugen im Flottenbetrieb erzielt werden. Dies ermöglicht z. B. eine individuelle Anpassung des Fahrzeuges an das Warengut oder eine direkte Steuerung der Einrichtungen eines Tankfahrzeuges.

Durch eine optional zusätzliche Sicherheitseinrichtung, z. B. in Form eines SmartCard-Controller oder einer steckbaren SIM-Karte in Verbindung zu Tachographensystem zur Authentisierung und sicheren bidirektionalen Kommunikation, wird es gestattet eine Steuerung und Übertragung von kritischen Fahrerdaten und sensiblen Fahrzeugparametern oder SW-Update von Steuergeräte Daten durchzuführen.

Beispielhaft für steuerbare Funktionen seien eine Betätigung eines Fahrzeugschließsystems, eines am Fahrzeug montierten Krans, einer anhebbaren Beladeklappen von LKWs, einer Hebebühne, eines Navigationssystems sowie eine Betätigung von Infotainmentsystemen, Navigationssystemen und/oder Komfortfunktionen genannt. Es sei darauf hingewiesen dass mit einer Mehrzahl von Funktionen gemeint ist, dass Funktionen einer Mehrzahl verschiedener Geräte eines Fahrzeugs angesteuert werden können.

Weitere steuerbare Funktionen sind die in dem Fahrzeug befindlichen Fahrerassistenz- und Fahrzeugsicherheitssysteme. Als Fahrzeugsicherheitssystemen sind alle im Fahrzeug verfügbaren Bremssysteme mit elektronischer Regelung einsetzbar. Fahrzeugsicherheitssysteme können das Electronic Break System (EBS), das Engine Management System (EMS), Antiblockiersystem, Antriebs-Schlupf-Regelung, Elektronisches Stabilitätsprogramm, Elektronische Differentialsperre, Transmission Control Unit (TCU), Elektronische Bremskraftverteilung (EBV) und/oder Motor-Schleppmomenten-Regelung (MSR), elektrisch ansteuerbare Lenkungen (ASF, EPS) sein.

Fahrerassistenzsysteme sind elektronische Zusatzeinrichtungen in Fahrzeugen zur Unterstützung des Fahrers in bestimmten Fahrsituationen. Hierbei stehen oft Sicherheitsaspekte, aber auch die Steigerung des Fahrkomforts im Vordergrund. Diese Systeme greifen teilautonom oder autonom in Antrieb, Steuerung (z. B. Gas, Bremse, Lenkung) oder Signalisierungseinrichtungen des Fahrzeuges ein oder warnen durch geeignete Mensch-Maschine-Schnittstellen den Fahrer kurz vor oder während kritischer Situationen. Solche Fahrassistenzsysteme sind beispielsweise Einparkhilfe (Sensorarrays zur Hindernis- und Abstandserkennung), Bremsassistent (BAS), Tempomat, Adaptive Cruise Control oder Abstandsregeltempomat (ACC), Abstandswarner, Abbiegeassistent, Stauassistent, Spurerkennungssystem, Spurhalteassistent/Spurassistent (Querführungsunterstützung, lane departure warning (LDW)), Spurhalteunterstützung (lane keeping support)), Spurwechselassistent (lane change assistance), Spurwechselunterstützung (lane change support), Intelligent Speed Adaption (ISA), Adaptives Kurvenlicht, Reifendruckkontrollsystem, Fahrerzustandserkennung, Verkehrszeichenerkennung, Platooning, Automatische Notbremsung (ANB), Auf- und Abblendassistent für das Fahrlicht, Nachtsichtsystem (Night Vision).

Die Mittel zum drahtlosen Datenaustausch können beispielsweise als WLAN nach IEEE 802.11 mit allen Derivaten, ZigBee und/oder BlueTooth Schnittstelle ausgebildet sein und vorteilhaft eine Reichweite zwischen 5 m und 1 km, besonders vorteilhaft zwischen 10 m und 300 m aufweisen. So ist ein drahtloser Datenaustausch mit einem im Fahrzeug integrierten Steuergerät auch von außerhalb des Fahrzeugs möglich. Vorteilhaft kann eine Reichweite von einer zu aktivierenden Fahrzeugfunktion abhängen, insbesondere derart, dass eine Sendeleistung der Mittel zum drahtlosen Datenaustausch bei einigen, vorteilhaft besonders sicherheitsrelevanten, Fahrzeugfunktionen reduziert ist. Durch die Funktionalität des drahtlosen Datenaustausches kann das Dockingterminal auch als so genannter Hotspot in Form eines Wireless Access Point (WAP) in dem Fahrzeug fungieren. In einer Ausgestaltung kann das Dockingterminal als Access-Points in den Client-Modus schalten, so dass das Dockingterminal wie ein WLAN-LAN-Adapter verhält.

Als kryptologische Verfahren können vorzugsweise sicherheitstechnische Verfahren eingesetzt werden, welche die Eigenschaften Integrität, Authentizität und/oder Vertraulichkeit erfüllen.

Vorteilhaft weist das Dockingterminal eine Anzeigevorrichtung auf. Hierdurch ist es möglich, nicht nur Vorgänge zu steuern, sondern auch Informationen vom Fahrzeug abzurufen und anzuzeigen. Beispielsweise können Informationen zur Überwachung der Ausführung einer Fahrzeugfunktion abgerufen werden.

In einer vorteilhaften Ausführungsform beinhaltet das Dockingterminal mindestens einen Datenspeicher. Bei einem solchen Speicher kann es sich insbesondere um eine nichtflüchtige Massenspeichereinheit handeln. Ein solcher kann vorteilhaft als Flash-Speicher ausgebildet sein. Besonders vorteilhaft ist der Datenspeicher als sicherer Datenspeicher ausgebildet. Hierzu kann der Datenspeicher zum verschlüsselten Speichern von Daten ausgelegt sein.

Vorteilhaft ist, dass das Dockingterminal zum Speichern von Nutzerprofilen auf dem Datenspeicher ausgebildet ist. In den Nutzerprofilen können Einstellungen zur Veränderung einer Menüführung zur Steuerung von Fahrzeugfunktionen beinhaltet sein. Beispielsweise können einige Tasten individuell vom Nutzer mit für Ihn wichtigen Funktionen belegt werden. Hierdurch wird eine verbesserte Anpassung an ein durch den Nutzer vorgegebenes Anforderungsprofil an das Dockingterminal gegeben. Außerdem kann das Dockingterminal auch dazu ausgebildet sein, im Nutzerprofil zusätzlich Informationen über den Nutzer zu speichern, welche nicht direkt die Bedienung des Dockingterminals betreffen. So können beispielsweise Einstellungen einer Sprachsteuerung mit im Nutzerprofil gespeichert sein.

Vorteilhaft können auch mehrere verschiedene Nutzerprofile auf dem Datenspeicher gespeichert werden. Ein zu verwendendes Nutzerprofil wird dann vorteilhaft beim Start der Nutzung des Dockingterminals abgefragt und kann auch während des Betriebs umgestellt werden.

Auf dem Datenspeicher können vorteilhaft auch aktualisierte Programme und/oder Treiber für in einem Fahrzeug integrierte oder mit einem Fahrzeug verbundene Geräte gespeichert werden. Das Dockingterminal kann vorteilhaft zum Übertragen der Treiber und/oder aktualisierten Programme an ein Steuergerät zur Weiterleitung an ein Zielgerät ausgebildet sein. Außerdem können auf dem Datenspeicher aufgezeichnete Tachographendaten gespeichert werden.

In einer weiteren vorteilhaften Ausführungsform ist die integrierte Datenverarbeitungseinheit des Dockingterminals derart ausgebildet, dass sie nicht nur ein Steuern von Fahrzeugfunktionen, sondern auch von Funktionen von weiteren an das Fahrzeug angeschlossenen Vorrichtungen, wie den bereits erwähnten Systemen ermöglicht. Hierzu ist die Datenverarbeitungseinheit zum Übermitteln von Steuerbefehlen für weitere an das Fahrzeug angeschlossene Vorrichtungen über die Mittel zum drahtlosen Datenaustausch an ein Steuergerät, welches die Steuerbefehle dann weiterleiten kann, ausgebildet.

Nötige Steuerinformationen können vorteilhaft nachträglich in das Dockingterminal gespeichert werden, so dass ein Funktionsumfang des Dockingterminals einem, beispielsweise durch Nachrüsten des Fahrzeugs oder Anschließen von zusätzlichen Geräten, veränderten Funktionsumfang jederzeit angepasst werden kann. Vorteilhaft kann das Dockingterminal jedoch bereits die nötigen Steuerbefehle für eine Vielzahl von nachrüstbaren Komponenten für das Fahrzeug beinhalten, so dass ein nachträgliches Nachrüsten nur in Sonderfällen notwendig ist.

In einer besonders vorteilhaften Ausführungsform ist das Dockingterminal mit einem mobilen Endgerät zur Steuerung einer Fahrzeugschließanlage ausgebildet, wobei jedoch vorteilhaft die Datenverarbeitungseinheit derart ausgebildet ist, dass kryptologische Verfahren nicht nur beim Steuern einer Fahrzeugschließanlage, sondern auch bei Steuerung von weiteren Fahrzeugfunktionen verwendbar sind. Das Dockingterminal ist dann in der Form ausgeführt, dass wenn das mobile Endgerät aus dem Fahrzeug entfernt wird, eine Aktivierung der Fahrzeugschließanlage erfolgt und das Fahrzeug gegen unberechtigten Zugang und Zugriff gesichert ist.

Vorteilhaft ist die Datenverarbeitungseinheit des Dockingterminals zum Verwenden mehrerer verschiedener kryptologischer Verfahren ausgebildet.

Es ist beispielsweise eine Ausbildung zur Verwendung von symmetrischen und/oder von asymmetrischen Verschlüsselungsverfahren möglich. In einer vorteilhaften Ausführungsform kann die Datenverarbeitungseinheit des Dockingterminals zur Verschlüsselung durch DES und/oder RSA ausgebildet sein. Besonders vorteilhaft derart, dass jeweils beim Einschalten der Dockingterminals ein durch ein asymmetrisches Verfahren wie RSA verschlüsselter Sitzungsschlüssel übermittelt wird, welcher anschließend zur symmetrischen Verschlüsselung, beispielsweise durch DES, verwendet wird. Ein Beispiel eines Verfahrens, bei dem eine Nachricht symmetrisch verschlüsselt übertragen wird, während der Schlüssel asymmetrisch verschlüsselt mit der Nachricht übertragen wird, ist das PGP-Verfahren (Pretty Good Privacy).

Außer einer Ausbildung der Datenverarbeitungseinheit des Dockingterminals zur Verwendung von Verschlüsselungsverfahren ist auch eine Ausbildung für andere kryptologische Verfahren angedacht. Beispielsweise kann die Datenverarbeitungseinheit des Dockingterminals zum Erstellen und Prüfen von digitalen Signaturen, zur Verwendung von Hashfunktionen und/oder zur Verwendung verschiedenen Authentifizierungsverfahren wie beispielsweise Challenge-Response-Authentifizierung.

Vorteilhafterweise kann die Datenverarbeitungseinheit zur Verwendung eines Zwei- oder Drei-Faktor-Authentifizierungsverfahrens ausgebildet sein. Hierunter ist zu verstehen, dass zur Authentifizierung nicht nur eine Information notwendig ist, wie beispielsweise ein Schlüssel eines Verschlüsselungsverfahrens, sondern zugleich auch die Anwesenheit eines bestimmten Objekts und/oder der Nachweis eines bestimmten biometrischen Merkmals.

Hierzu beinhaltet das Dockingterminal vorteilhaft eine zusätzliche Sicherheitsvorrichtung. Diese kann beispielsweise als SmartCard-Controller ausgebildet sein, wobei zur Übermittlung von korrekt signierten Steuerbefehlen, insbesondere für sicherheitsrelevante Steuerbefehle, vorzugsweise eine vorgegebene SmartCard in den Controller eingesteckt sein muss. Um ein besonders hohes Sicherheitsniveau zu erreichen kann hierbei vom Prinzip der Geheimnisteilung Gebrauch gemacht werden. Hierzu kann das Dockingterminal dazu ausgebildet sein, nur einen Teil eines zur Signierung und/oder Verschlüsselung notwendigen Codes zu speichern, wobei ein zweiter Teil des Codes vom Smart-Card-Controller eingelesen wird. Ein weiteres Beispiel zusätzlicher Sicherheitseinrichtungen sind Iris- oder Fingerabdruckerkenner oder weitere biometrischer Merkmale.

Eine weitere mögliche zusätzliche Sicherheitsvorrichtung ist ein Gehäuseschutz des Dockingterminals. Dieser kann zum Erkennen eines Öffnens des Gehäuses des Dockingterminals und zum Einleiten von dann notwendigen Sicherheitsmaßnahmen ausgebildet sein. Eine solche Sicherheitsmaßnahme kann das Löschen von sicherheitsrelevanten Daten oder ein Sperren des Dockingterminals sein.

Vorteilhaft kann zur Steuerung einer Fahrzeugschließanlage ein anderes kryptologisches Verfahren verwendet werden als für andere Steuerbefehle. Es sei erwähnt, dass das Dockingterminal nicht zwangsläufig dazu ausgebildet sein muss, dass jegliche Steuerbefehle für Fahrzeugfunktionen durch ein kryptologisches Verfahren verschlüsselt übertragen werden. Vielmehr kann es von Vorteil sein, wenn nur sicherheitsrelevante Steuerbefehle verschlüsselt übertragen werden.

In einer vorteilhaften Ausführungsform ist die Datenverarbeitungseinheit des Dockingterminals dazu ausgebildet, Funktionen des Bordcomputers anzusteuern und zu aktivieren.

Hierdurch können beispielsweise im Fahrzeug verwendete Systeme überprüft und eventuell bestehende Fahrzeugprobleme diagnostiziert werden. Hierzu können Messwerte von im Fahrzeug verbauten Sensoren abgerufen werden. Außerdem können verschiedene Nutzereinstellungen, beispielsweise Einstellungen von Komfortfunktionen des Fahrzeugs und der Fahrerassistenzsysteme, verändert werden. Alternativ oder zusätzlich kann die Datenverarbeitungseinheit dazu ausgebildet sein, Funktionen des Bordcomputers komplett zu übernehmen. Dies ermöglicht es auf die Funktionen zuzugreifen, ohne dass der Bordcomputer selbst aktiv ist.

In einer besonders vorteilhaften Ausführungsform ist das Dockingterminal zugleich als Mobiltelefon und/oder PDA ausgebildet. Hierdurch ergeben sich erhebliche Einsparungen gegenüber einer Verwendung von separaten Geräten, da viele Komponenten somit eine Doppelfunktion erfüllen können. Beispielsweise kann eine Anzeigevorrichtung, welche beispielsweise als Touchscreen ausgebildet sein kann, sowohl zur Anzeige von SMS, MMS und eingehenden Anrufen, als auch zur Anzeige von aktivierbaren Fahrzeugfunktionen verwendet werden. In dieser Aufbauform besitz die Dockingterminal eine Aufnahme der SIM-Karte eines Mobilfunkbetreibers, womit dann die Dockingterminal als sämtliche Funktionalität eines mobilen Endgerätes zugänglich macht. In einer Antenne zur Anbindung an ein Mobilfunknetz können die Mittel zum drahtlosen Datenaustausch mit einem Steuergerät integriert werden. Insgesamt ergeben sich hierdurch sowohl ein Kosten- als auch ein Komfortvorteil, denn somit ist ein Mitführen eines zusätzlich anfallenden Gerätes nicht notwendig.

Alternativ kann das, wie bereist erwähnt das Dockingterminal wie ein Mobiltelefon oder PDA ausgebildet sein. Beispielsweise kann das Dockingterminal ein Anschluss für ein Ladegerät, die Ausbildung mit einem Touchpad und/oder die Ausbildung zur Verwendung eines Betriebssystems, wie für Mobiltelefone und/oder PDAs nach dem Stand der Technik bekannt, aufweisen. Des Weiteren kann, wie bereist erwähnt, das Dockingterminal eine Aufnahme für eine SIM-Karte aufweisen. Eine solche ist insbesondere bei Ausbildung des Dockingterminals als Mobiltelefon notwendig.

In einer weiteren vorteilhaften Ausführungsform ist die Datenverarbeitungseinheit mit mindestens einer im Dockingterminal integrierte Schnittstelle zum Auslesen und/oder Beschreiben von Karten und/oder mobilen Speichermedien verbunden. Eine solche Schnittstelle dient beispielsweise dazu, dem Dockingterminal zur Steuerung von neu an das Fahrzeug angeschlossenen Vorrichtungen benötigte Daten zur Verfügung zu stellen.

Eine weitere Schnittstelle des Dockingterminals kann zum Auslesen einer Fahrerkarte ausgebildet sein. Derartige Fahrerkarten werden üblicherweise für Tachographen verwendet. Da, aufgrund der Ausbildung der Datenverarbeitungseinheit zum Verwenden von kryptologischen Verfahren, eine Übertragung hinreichend zuverlässig ist, ist ein Einschieben der Fahrerkarte in einen Tachographen nicht mehr notwendig. Dies vereinfacht die Benutzung des Tachographen, da auf ein manuelles Zugreifen auf diesen vorteilhaft komplett verzichtet werden kann, denn sowohl die Steuerung des Tachographen als auch das Zugreifen auf die Fahrerkarte kann über das Dockingterminal erfolgen.

Dies ermöglicht auch, eine vorteilhaftere Anordnung von Instrumenten im Cockpit von Nutzfahrzeugen, da der Tachograph nicht mehr zwingend an einer gut zugänglichen Stelle eingebaut werden muss. Hierdurch wird Platz für bei der Fahrt benötigte Instrumente frei.

Außerdem kann so ein Nutzerprofil des Dockingterminals automatisch anhand einer eingeschobenen Fahrerkarte gewählt werden.

Zusätzlich kann das Dockingterminal eine USB Schnittstelle aufweisen. Über diese kann das Dockingterminal zwecks Übertragung von Daten beispielsweise an einen Computer oder Notebook angeschlossen werden. Das Dockingterminal weist weitere Schnittstellen bzw. Anschlüsse zur Interaktion mit einer drahtgebunden Peripherie auf, die in Form von einer PCI und/oder PCMCIA und/oder PC-Card und/oder Fire-Wire ausgestaltet ist.

Eine weitere Erhöhung des Komforts ist möglich, indem das Dockingterminal zum schlüssellosen Identifizieren ausgebildet wird. Durch eine derartige Ausbildung als sicheres "Identifikation-Tool" ist es möglich auf eine Vielzahl von Funktionen zuzugreifen die sonst einer Identifizierung durch einen Schlüssel bedürften. Beispielsweise können verschiedene Fahrzeug-Aggregate aktiviert oder deaktiviert werden. Außerdem kann eine Zugangskontrolle zu gesicherten Bereichen des Fahrzeugs durch das Dockingterminal erfolgen.

In einer besonders vorteilhaften Ausführungsform ist das Dockingterminal derart ausgebildet, dass sogar ein Identifizieren zum Herstellen einer Bankverbindung durch das Dockingterminal möglich ist. Hierzu beinhaltet das Dockingterminal vorteilhaft eine als Bankkartenleser ausgebildete Schnittstelle. Bezahlvorgänge, beispielsweise an Tankstellen, werden so deutlich vereinfacht. Dies verringert den Zeitbedarf für Tankvorgänge was, über eine Gesamtlebensdauer eines erfindungsgemäßen Dockingterminals gerechnet, zu erheblichen Einsparungen führt.

Vorzugsweise können die Mittel zum drahtlosen Datenaustausch zum automatischen Deaktivieren bei einem Fahrtbeginn ausgebildet sein. Hierdurch werden eventuelle Störungen des Fahrzeugs durch die Mittel zum drahtlosen Datenaustausch zuverlässig vermieden.

Das Dockingterminal beinhaltet vorteilhaft eine kabelbasierte Schnittstelle. Hierdurch kann das Dockingterminal auch über einen direkten Anschluss mit dem Steuergerät verbunden werden. Unter "kabelbasiert" ist hier nicht zwangsläufig eine Öffnung zum einschieben eines Kabelsteckers zu verstehen. Vielmehr sind in einer besonders vorteilhaften Ausführungsform Kontakte zum Einführen in eine Dockingstation vorgesehen. Hierdurch ist eine Verwendung des Dockingterminals, während die Mittel zum drahtlosen Datenaustausch deaktiviert sind, möglich. Durch eine Verbindbarkeit mit einer Dockingstation ist es außerdem möglich, das Dockingterminal zugleich als Zündschlüssel auszubilden, denn aus Sicherheitsgründen währe es trotz verschlüsselter Übertragung zumeist nicht wünschenswert eine drahtlose Aktivierung der Zündvorrichtung zu ermöglichen.

Des Weiteren betrifft die Erfindung auch ein System zur mobilen Ansteuerung von Fahrzeugfunktionen. Ein solches System beinhaltet zumindest ein Dockingterminal und ein mit dem Fahrzeug verbundenes oder verbindbares Steuergerät. Das Steuergerät und das Dockingterminal sind zum Datenaustausch miteinander ausgebildet, wobei sowohl das Steuergerät als auch das Dockingterminal zum Verwenden von kryptologischen Verfahren beim Datenaustausch ausgebildet sind. Das Steuergerät ist dazu ausgebildet, abhängig von einer Betätigung der Eingabevorrichtung des Dockingterminals Steuersignale und/oder andere Daten an ein Zielgerät auszugeben.

Die Abhängigkeit kann in einer einfachen Ausführungsform derart gegeben sein, dass das Dockingterminal lediglich Informationen über die Betätigung der Eingabevorrichtung an das Steuergerät verschlüsselt überträgt, wobei das Steuergerät davon abhängig Steuersignale generiert. Im einfachsten Fall ist das Dockingterminal lediglich als drahtloses zum verschlüsselten Übertragen ausgebildetes Eingabegerät ausgebildet.

Bevorzugt jedoch ist das Dockingterminal zum Erzeugen und Übertragen von Steuersignale ausgebildet, welche vom Steuergerät vorteilhaft lediglich an ein Zielgerät weitergeleitet werden, wobei das Zielgerät durch das Dockingterminal mit den übertragenen Daten und/oder Steuersignalen festgelegt wird.

Unter einem Zielgerät wird hier das Gerät verstanden, von dem durch die übertragenen Daten eine Funktion abgerufen werden soll. Beinhalten die Daten beispielsweise die Information, dass die Heizungstemperatur der Sitzheizung erhöht werden soll, wäre das Zielgerät das Gerät welches die Sitzheizungstemperatur reguliert.

Weiterhin ist zu erwähnen, dass das Ausgeben der Daten und/oder Steuersignale erfindungsgemäß nicht zwingend direkt an das Zielgerät erfolgen muss. Gleichfalls ist es möglich, dass vom Dockingterminal übermittelte und vom Steuergerät empfangene Steuerbefehle über ein oder mehrere zwischengeschaltete Geräte an das Zielgerät weitergeleitet werden.

Vorteilhaft kann auch das Steuergerät zusätzliche Sicherheitsvorrichtungen, wie vorangehend für das Dockingterminal beschrieben, aufweisen.

In einer vorteilhaften Ausführungsform beinhaltet das Steuergerät zugleich ein Instrument und insbesondere einen Tachographen oder ist als ein solches ausgebildet. Insbesondere eine Ausbildung als Tachograph kann vorteilhaft sein, da Tachographen auf Grund von gesetzlichen Auflagen ohnehin ein hohes Sicherheitsniveau aufweisen. Beispielsweise weisen Tachographen zumeist einen Gehäuseschutz, welcher ein unberechtigtes Öffnen des Gehäuses aufzeichnet, und einen sicheren Datenspeicher auf.

Hierdurch ist der Aufwand zur Herstellung eines als Steuergerät ausgebildeten modifizierten Tachographen deutlich geringer als der zur Herstellung eines Tachographen und eines separaten Steuergeräts.

Der Tachograph oder das Instrument kann vorteilhaft Teil eines Kombigerätes sein, wobei das Dockingterminal und das Steuergerät vorteilhaft derart ausgelegt sind, dass nicht nur Funktionen von Geräten abgerufen werden können die Teil des gleichen Kombigerätes sind, sondern auch von weiteren, nicht zum selben Kombigerät gehörigen Geräten.

In einer besonders vorteilhaften Ausführungsform wird das Steuergerät durch einen Tachographen und ein lösbar mit einem Tachographen verbindbares Modul zum drahtlosen Datenaustausch mit dem Dockingterminal gebildet. Die austauschbaren Daten können beispielsweise auch Daten zur Steuerung des Tachographen umfassen. Hierdurch wird eine vom Einbauort unabhängige Bedienung des Tachographen ermöglicht. Außerdem kann das Dockingterminal eine deutlich höhere Zahl an Bedienmöglichkeiten, beispielsweise bereitgestellt durch im Dockingterminal integrierte Tasten, aufweisen als der Tachograph. Hierdurch können Funktionen des Tachographen deutlich schneller aufgerufen werden, da eine Betätigung einer einzelnen Taste am Dockingterminal einer Betätigung einer Mehrzahl von Tasten am Tachographen entsprechen kann. Außerdem kann eine Bedienungsoberfläche und Nutzerführung vorteilhaft vom Nutzer selbst umkonfiguriert werden.

Vorteilhaft können durch das Dockingterminal Arbeitszeiten und gefahrene Strecken abgefragt werden. Außerdem können Ausdrucke mit vom Tachographen ermittelten Informationen von einem vorteilhaft im Tachographen integrierten Drucker angefordert werden. Gleichzeitig ist eine Nutzung eines im Tachographen integrierten Druckers zum Ausdruck beliebiger anderer Fahrzeuginformationen und/oder weiterer durch das Dockingterminal eingegebener Informationen möglich. Vorteilhaft können auch jegliche weitere Funktionen des Tachographen über das Dockingterminal abgerufen werden.

In einer vorteilhaften Ausführungsform ist die lösbare Verbindung zwischen dem Modul und dem Tachographen als K-Linie ausgebildet.

Allgemein kann ein lösbar mit einem im Fahrzeug verbauten Gerät verbindbares Modul zum drahtlosen Datenaustausch mit dem Dockingterminal, zusammen mit dem im Fahrzeug verbaute Gerät selbst das Steuergerät bilden. Hierdurch ergibt sich der Vorteil, dass ein bereits im Fahrzeug verbautes Gerät nachgerüstet werden kann um ein Steuergerät für ein erfindungsgemäßes System zu bilden.

In einer besonders bevorzugten Ausführungsform beinhaltet das System eine integriertes Dockingterminal. Das Dockingterminal kann zum Aufladen des Energiespeichers ausgebildet sein. Außerdem kann das Dockingterminal derart ausgebildet sein, dass beim Verbinden die Mittel zum drahtlosen Datenaustausch des Dockingterminals und des Steuergerätes deaktiviert werden, wobei die Dockingterminal die Aufgabe des Verbindens des Steuergeräts zum Datenaustausch übernimmt.

Ein Verbinden des Dockingterminals ist vorteilhaft durch ein Kabel und/oder durch eine Steckverbindung möglich. Auch ein Verbinden durch Hineinstellen in das Dockingterminal, wie es beispielsweise bei drahtlosen Festnetztelefonen bekannt ist, ist möglich.

Besonders bevorzugt ist das Dockingterminal in das Steuergerät integriert. Hierdurch wird eine Notwendigkeit eines zusätzlichen Gerätes vermieden.

Vorteilhaft sind das Steuergerät und das Dockingterminal derart ausgebildet, dass beim Verbinden automatisch Informationen aus dem Nutzerprofil ausgelesen werden. Durch diese Informationen können dann Steuersignale zur Veränderung von Konfigurationen von Einrichtungen im Fahrzeug ausgegeben werden . Hierbei ist eine Steuerung beliebiger nutzerkonfigurierbarer Geräte im Fahrzeug denkbar. Beispielsweise können Einstellungen des Fahrersitzes, der Fahrzeugspiegel, der Sprachsteuerung, der Infotainmentsysteme, der Klimaanlage sowie weiterer Komfort- und Nutzfahrzeugfunktionen verändert werden.

Hierfür ist es nicht zwingend notwendig, dass das Nutzerprofil, wie vorangehend beschrieben, auf einem im Dockingterminal integrierten Datenspeicher gespeichert ist. Ebenso können ein oder mehrere Nutzerprofile auch im Steuergerät gespeichert sein, wobei der aktuelle Nutzer und damit das zu verwendende Nutzerprofil anhand eines mit Dockingterminal verbundenen Dockingterminals automatisch bestimmt werden kann.

In besonders Vorteilhaften Ausführungsform beinhaltet das System eine Mehrzahl von Dockingterminal, wobei jedes der Dockingterminal zum Speichern mindestens eines Nutzerprofils ausgebildet sein kann. Somit können eine Bedienerführung und die zum Abrufen einer bestimmten Funktion zu verwendenden Tasten vom verwendeten Dockingterminal abhängen.

Das erfindungsgemäße Dockingterminal ist über mindestens eine Schnittstelle zu einer ECU im Fahrzeug z. B. Tachograph, On-Bord-Unit oder Instrument/Dashboard verbunden. Das Dockingterminal besitzt spezielle-Ausprägungen wie u. a. Versorgungsanschluss, Kommunikationsschnittstelle und mindestens eine mechanische Halteeinrichtung für den Anschluss und Betrieb eines mobilen Kommunikations-Endgerätes z. B. Smartphones, PDAs oder PCs (Notebook, Tablett-PC) an die Automotive-Umgebung des Fahrzeuges, optional bzw. aufrüstbar/nachrüstbar ist ein das solches Dockingterminal mit mindestens einer drahtlosen Schnittstelle, wie z. B. einem Antennen-Expander und/oder einer Sicherheitseinrichtung in Form eines Zugriffsschutz oder einer Firewall.

Eine weitere Ausführungsform zeichnet sich dadurch aus, das ein Dockingterminal mit zusätzlicher Sicherheitseinrichtung welche Informations-Zugriffe mit Steuergeräten wie z. B. Tachographen oder Universal-Onboard-Units gestattet und sich z. B. durch gegenseitige Authentisierung zu einem örtlich verteilten Sicherheitssystem ausbauen lässt.

Die Vorteile eines solchen Aufbaues der Dockingterminals sind eine erweiterte Anzeige/Ein-Ausgabe/Weiterleitung von Fahrzeugals auch Fahrerdaten über Sicherheitseinrichtungen zwischen ECUs und mobile Kommunikationseinrichtungen, z. B. durch direkte Handhabung im unmittelbaren Sicht- und Bedienbereich des Fahrers . Hierdurch können vorteilhaft eine Übergabe und das Lesen sensibler Steuerparameter z. B. zur Steuerung, Diagnostik und Parametrierung erfolgen.

Vorteilhaft ist es weitergehend, dass Synergien bzw. Einsparung und eine Reduktion von einzelnen HMI-Einrichtungen im Fahrzeug durch ein zentrales Dockingterminal erfolgt. Desweiteren ist eine flexible Anordnung und ein flexibles Bediendesign durch ein zentrales im Fahrzeug angeordnetes Dockingterminal im direkten Bereich des Fahrers möglich, welches vorteilhaft eine Reduktion des Komplexitätsgrades der Bedienung bedeutet.

In einer weiteren Ausführungsform des Dockingterminals, werden neben den vorgenannten Eigenschaften weitere Funktionalitäten vorteilhaft verknüpft, wie z.B. Wide-Range-Wireless-Schnittstellen für den Mobilfunk und/oder Satelittenkommunikation und/oder Geo-Ortsdaten-Erfassung

Als Wide-Range-Wireless-Schnittstellen können in einer vorteilhaften Ausgestaltung des Docketingterminals ein oder mehreren möglicher Mobilfunknetze wie UMTS, GPRS, GSM, den sogenannten den 2G, 2, 5G, 3G oder 4G Netzen oder Satellitenkommunikationsnetze gleichzeitigen anwählen bzw. genutzt werden, um verschieden Mehrwertdienste aus dem Fahrzeug heraus zu aktivieren.

Eine Geo-Ortsdaten-Erfassung erfolgt mittels satellitengestützter Informationen von den Satelliten-Systemen GLOSNASS und/oder GPS und/oder COMPASS und/oder Galileo und/oder IRNSS und/oder EGNOS und/oder GAGAN und/oder MEAS und/oder WASS. Vorteilhaft wird diese Kombination, da die Antennen in dem Dockingterminal im Fahrerbereich optimiert angeordnet werden und die Daten über die vorhandene Datenschnittstelle z. B. dem Tachograph übertragen wird.

Ja nach Ausprägung der Konfiguration und Ausstattung des Dockingterminals ergeben sich verschiedene Betriebszustände.

So gestattet die Geräte-Konfiguration z. B. digitaler Tachograph, Dockingterminal und mobiles Endgerät, das im Falle das das mobile Endgerät, wie ein Smartphone in Dockingterminal gesteckt wird, dass das Dockingterminal als Ladestation eingesetzt wird und gleichzeitig der Fahrer über das mobile Endgerät Fahrer-/Fahrzeugdaten auf das mobile Endgerät übertragen und bearbeiten kann.

In der einer weiteren Aufbauvariante ist das mobile Endgeräte mit dem Dockingterminal über eine Wireless-Schnittstelle verbunden und eine Kommunikation im Sende-/Empfangsbereich des Dockingterminal durchführbar, wobei durch das Einführen des mobilen Endgerätes in das Dockingterminal die Komponenten der integrierten Wireless-Schnittstellen des Dockingterminals bei Nutzung von 2, 3 oder 4G Mobilfunkverbindungen immer über die Mobilfunkfunktionalität des mobilen Endgerätes durchgeführt wird. Hierdurch ist auch ein sogenannter Modem-/Expanderbetrieb zur Übertragung von Fahrer-/Fahrzeugdaten an eine stationäre Station z. B. zu einem Server von Fuhrpark über Mobilfunk oder über das Internet möglich.

In diesem verbundenen Zustand von Dockingterminal und mobilen Endgerät kann eine sogenannte Remote-Control-Funktion von applikativen Fahrzeugenaggregaten wie z.B. Kran, Tank (-pumpen), Kühlaggregate direkt über das mobile Endgerät mittels des Dockingterminals ausgeführt werden.

Prinzipiell entsteht durch das Dockingterminal eine virtuelle drahtlose Automotive-Schnittstelle z. B. über den CAN, MOST, Flexray Kommunikations-, Steuer und Parametrierdaten zur sicheren Übertragung von externen Informationsquellen in das Fahrzeug zu portieren.

In einer Ausführungsform dient das Dockingterminal wie eine integrierte "Sicherheitseinrichtung" in Form einer Firewall und erfüllt die Funktionalität eines Zugriffsschutz für den Datenaustausch mit fahrzeuginternen Steuergeräten insbesondere mit dem Tachograph. Daraus entsteht ein verteiltes und mobiles System zur Übertragung uns Austausch von sicheren und bidirektionalen Inhalten, Transaktionen und Kommandos.

Durch das Dockingterminal wird eine virtuelle und sichere, ggf. Sicherheits-Zertifiziert Automotive-Schnittstelle z. B. zwischen WLAN und CAN erzeugt.

In einer weiteren Ausführungsform des erfindungsgemäßen Dockingterminal sind eine Anzeige und Eingabemöglichkeit über Tasten oder Touchpad in der Anzeige um Grundfunktionalitäten wie Status des Terminal anzeigen oder abzurufen. Es ist ebenfalls angedacht kritischen Informationen im Fahrzeug, welche über die Automotive-Schnittstelle angeschlossen sind anzuzeigen.

Ausführungsbeispiele der Erfindung werden nachfolgend anhand der Figuren 1 bis 6 näher erläutert. Es zeigen:
- Figur 1:: Skizze einer ersten Ausführungsform eines erfindungsgemäßen Systems im in einen Fahrzeug eingebauten Zustand,
- Figur 2:: Skizze des Dockingterminals einer zweiten Ausführungsform der Erfindung,
- Figur 3:: Skizze eines dritten erfindungsgemäßen Systems mit in ein Steuergerät integriertem Dockingterminal,
- Figur 4:: Skizze eines vierten erfindungsgemäßen Systems mit einem separaten Dockingterminal,
- Figur 5:: Skizze eines fünften Ausführungsbeispiels der Erfindung und
- Figur 6:: Skizze einer sechsten Ausführungsform der Erfindung.

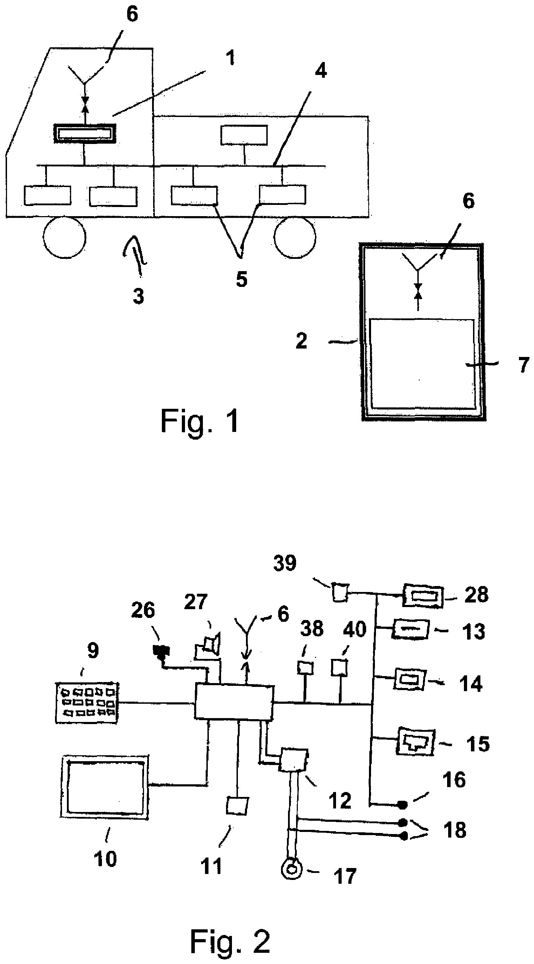

Figur 1 zeigt eine erste Ausführungsform eines erfindungsgemäßen Systems zur mobilen Ansteuerung von Fahrzeugfunktionen. Das System besteht aus einem sicheren Steuergerät 1 und einem Dockingterminal 2. Das Steuergerät 1 ist im Fahrzeug 3 integriert und über ein im Fahrzeug integriertes Bussystem 4 mit einer Mehrzahl weiterer Steuergeräte 5 verbunden, wobei die weiteren Steuergeräte 5 zumeist keine Sicherheitsfunktionen, wie eine Unterstützung einer verschlüsselten Datenübertragung aufweisen. Sowohl im Steuergerät 1 als auch im Dockingterminal 2 ist jeweils eine zur kryptologischen Ver- und Entschlüsselung von Daten, beispielsweise durch ein RSA oder DES Verfahren, ausgebildete nicht dargestellte Datenverarbeitungseinheit, sowie Mittel zum drahtlosen Datenaustausch integriert. Die Mittel zum drahtlosen Datenaustausch sind im vorliegenden Ausführungsbeispiel als WLAN-Antenne 6 ausgebildet und weisen eine Reichweite von 300 m auf, so dass auch von außerhalb des Fahrzeugs Fahrzeugfunktionen durch das Dockingterminal 2 aktiviert werden können. Ebenso wäre eine Ausbildung der Mittel zum drahtlosen Datenaustausch als ZigBee- oder BlueTooth-Schnittstelle möglich. Das Dockingterminal 2 beinhaltet außerdem eine Eingabe- und eine Anzeigevorrichtung, welche im vorliegenden Ausführungsbeispiel kombiniert als Touchscreen 7 ausgebildet sind.

Durch das Touchscreen 7 können durch das Dockingterminal 2 über das Steuergerät 1 abrufbare Informationen, beispielsweise bezüglich des Fahrzeugzustands, angezeigt werden.

In einer vereinfachten Ausführungsform kann das Dockingterminal 2 ohne eine Anzeigevorrichtung ausgebildet sein. In derartigen Ausführungsformen erfolgt ein Anzeigen stattdessen durch eine vorteilhaft im Steuergerät 1 integrierte Anzeigevorrichtung.

Das Dockingterminal 2 ist dazu ausgebildet, abhängig von Eingaben eines Nutzers über den Touchscreen 7, durch ein kryptologisches Verfahren verschlüsselte und/oder einer Signierung versehene oder unverschlüsselte Steuerbefehle an das Steuergerät 1 zu übertragen. Die Befehle werden vom Steuergerät 1 an die verschiedenen weiteren Steuergeräte 5 weitergeleitet, wobei die Weiterleitung zumeist unverschlüsselt und unsigniert erfolgt.

Erteilt ein Nutzer beispielsweise die Anweisung ein im Fahrzeug vorhandenes Antiblockiersystem (ABS) abzuschalten, so erfolgt die Übertragung des entsprechenden sicherheitsrelevanten Steuerbefehls verschlüsselt und/oder mit einer digitalen Signatur, welche die Authentizität des Dockingterminal und/oder eines Benutzers sicherstellt an die zur Steuerung des ABS ausgebildete weitere Steuereinheit 5. Hierdurch ist es unbefugten nicht möglich durch ein ähnliches Dockingterminal, beispielsweise aus einer gleichen Baureihe, diese sicherheitsrelevante Funktion unberechtigt zu ändern.

Erteilt ein Nutzer hingegen den Befehl eine im Fahrzeug befindliche Klimaanlage anzuschalten, um vor Betreten des Fahrzeugs eine angenehme Innenraumtemperatur zu erzeugen, erfolgt die Ausgabe über die Antenne 6 vorteilhaft unverschlüsselt.

Das Dockingterminal 2 ist zusätzlich zum schlüssellosen Betätigen des Fahrzeugschließsystems ausgebildet, wofür es vorteilhaft einen nicht dargestellten RFID-Chip beinhaltet. Dieser ist ebenfalls zur Ausführung eines Verschlüsselungsverfahrens ausgebildet, wobei es sich um ein anderes, nicht von der Datenverarbeitungseinheit verwendetes Verfahren handeln kann.

Alternativ kann auch die Fahrzeugschließanlage durch das Dockingterminal 2 über das Steuergerät 1 betätigt werden ohne dass hierfür ein separater RFID-Chip vorhanden ist. Besonders vorteilhaft ist es, dass die Datenverarbeitungseinheit dazu ausgebildet ist, Steuerbefehle zum Betätigen des Fahrzeugschließsystems mit verringerter Sendeleistung über die Mittel zum drahtlosen Datenaustausch vom Dockingterminal 2 an das Steuergerät 1 auszugeben, da somit die Reichweite, aus der das Fahrzeugschließsystem aktiviert werden kann, verringert wird. Hierdurch wird es erschwert das Fahrzeug mit einem entwendeten Dockingterminal 2 aufzuspüren.

Das Steuergerät 1 ist dazu ausgebildet, die eingehenden Steuerbefehle zu verwalten und über das Bussystem 4 an die weiteren Steuergeräte 5 weiterzuleiten. Somit erfüllt das Steuergerät 1 eine Serverfunktion. Außerdem kann das Dockingterminal 2 dazu ausgebildet sein, Steuerbefehle für an eine Schnittstelle des Fahrzeugs angeschlossene nicht zum Fahrzeug gehörige Vorrichtungen auszugeben, wobei das Steuergerät 1 dazu ausgebildet ist die Steuerbefehle an die vorgenannte Schnittstelle weiterzuleiten.

In alternativen Ausführungsformen kann eine Aufgabenverteilung zwischen Dockingterminal 2 und Steuergerät 1 verschoben sein, dahingehend, dass vom Dockingterminal keine vollständigen Steuerbefehle, sondern lediglich Informationen über Betätigungen der als Touchscreen 7 ausgebildeten Eingabevorrichtung an das Steuergerät 1 übermittelt werden. In derartigen Ausführungsformen werden die eigentlichen Steuerbefehle vom Steuergerät 1 erzeugt.

Im vorliegenden Ausführungsbeispiel ist eine Übertragung in beide Richtungen, also vom Dockingterminal 2 zur Steuereinheit 1 und umgekehrt, möglich. Die Mittel zum drahtlosen Datenaustausch sind also sowohl als Sender als auch als Empfänger ausgebildet. Hierdurch können über das Dockingterminal Informationen über das Fahrzeug abgerufen werden.

In Figur 2 ist der Aufbau eines Dockingterminals entsprechend einer zweiten Ausführungsform der Erfindung schematisch Dargestellt. Das Dockingterminal beinhaltet eine Datenverarbeitungseinheit 8. An diese ist eine Eingabevorrichtung 9, ein Display 10, beispielsweise als Antenne 6 ausgebildete Mittel zum drahtlosen Datenaustausch, ein Datenspeicher 11, ein Energiespeicher 12 sowie ein Mikrofon 26, ein Lautsprecher 27, und eine Schnittstelle 28 zum Auslesen einer SIM-Karte angeschlossen. Außerdem kann die Datenverarbeitungseinheit 8 mit einem Chipkartenlesegerät 13, einem USB-Port 14, einem Anschluss 15 für eine RJ-45 Steckverbindung, einem Fingerabdruckdetektor 38, einem SmardCard-Controller 39, einem Gehäuseeingriffssensor 40 und Kontakten 16 zur Datenverbindung mit einer Andockstation verbunden sein.

Der Energiespeicher 12 ist mit einem Anschluss 17 für ein Ladekabel, sowie Kontakten 18 zum Aufladen über eine Andockstation verbunden.

In diesem Ausführungsbeispiel ist die Datenverarbeitungseinheit 8 mit einer hohen Rechenkapazität ausgebildet. Hierdurch wird es ermöglicht, dass die Datenverarbeitungseinheit 8 einen Teil des Funktionsumfangs oder auch den vollständigen Funktionsumfang des Bordcomputers des Fahrzeugs aufweist. Hierzu zählen beispielsweise das Abrufen von Messwerten von im Fahrzeug integrierten Sensoren sowie das Konfigurieren von verschiedenen Komfortfunktionen.

Außerdem ist die Datenverarbeitungseinheit 8 dazu ausgebildet, zum Mobiltelefonieren notwendige Daten- und Signalverarbeitungsschritte auszuführen. Zusätzlich ist die Antenne 6 zum Verbinden mit einem Mobilfunknetz ausgebildet. Das Dockingterminal 2 weist vorteilhaft den kompletten Funktionsumfang von nach dem Stand der Technik bekannten Mobiltelefonen auf, sodass das Dockingterminal ein herkömmliches Mobiltelefon vollständig ersetzt.

Des Weiteren ist die Datenverarbeitungseinheit 8 dazu ausgebildet Steuerbefehle mit einer digitalen Signatur an das Steuergerät zu übermitteln, wobei Steuerbefehle für sicherheitsrelevante Fahrzeugfunktionen vom Steuergerät 1 vorzugsweise nur korrekt Signiert akzeptiert werden. Die digitale Signatur kann vorteilhaft nur dann vollständig erstellt werden, wenn ein Fingerabdruck einer zur Benutzung des Dockingterminals 2 autorisierten Person durch den Fingerabdruckdetektor 38 erkannt wurde. Insbesondere kann die Signatur Daten über den erfassten Fingerabdruck enthalten. Hierdurch können zur Signatur Daten notwendig sein, die auf dem Dockingterminal selbst nicht gespeichert sind, so dass mit einem entwendeten Dockingterminal keine sicherheitsrelevanten Fahrzeugfunktionen gesteuert werden können.

Alternativ oder zusätzlich können zur Erstellung einer Signatur auf einer SmartCard gespeicherte Daten notwendig sein, welche über den SmartCard-Controller 39 eingelesen werden können.

Ein Teil der zur Erstellung einer Signatur notwendigen Daten kann außerdem auf dem Dockingterminal gespeichert sein. Diese Daten können vorteilhaft automatisch gelöscht werden, wenn der Gehäuseeingriffssensor 40 ein unzulässiges Öffnen eines Gehäuses des Dockingterminals 2 feststellt. Somit ist auch eine Manipulation des Dockingterminals ausgeschlossen.

Der Datenspeicher 11 ist im vorliegenden Ausführungsbeispiel als ein Flash-Speicher und insbesondere als ein sicherer Datenspeicher ausgebildet, wobei die Datenverarbeitungseinheit 8 zum verschlüsselten Speichern auf dem Datenspeicher 11 ausgebildet ist.

Auf dem Datenspeicher ist vorteilhaft ein Betriebssystem gespeichert, welches von der Datenverarbeitungseinheit verwendbar ist. Eine Menüführung zur Aktivierung von Fahrzeugfunktionen, sowie weitere Eigenschaften der Nutzeroberfläche können vom Nutzer frei konfiguriert und in ein auf dem Datenspeicher 11 gespeichertes Nutzerprofil gespeichert werden.

Außerdem kann ein Nutzer Voreinstellungen von Fahrzeugfunktionen in das Nutzerprofil speichern. Diese Voreinstellungen von Fahrzeugfunktionen können dann vorteilhaft auf Wunsch des Nutzers an das Steuergerät 1 übertragen werden, welches dann entsprechende Steuerbefehle an die weiteren Steuergeräte 4 weiterleitet.

Beispielsweise können der Fahrersitz und die Einstellungen der Fahrzeugspiegel automatisch dem Fahrer angepasst werden. Außerdem können Sprecherdaten für eine Sprachsteuerung automatisch aus dem Nutzerprofil geladen und an eine im Fahrzeug vorhandene Sprachsteuerung übertragen werden. Auch eine Vorauswahl von gespeicherten Radiosendern kann aus dem Nutzerprofil geladen werden.

Ein derartiges automatisches Konfigurieren des Fahrzeugs bietet vor allem dann Vorteile, wenn ein Fahrer eines Fahrzeugs häufig wechselt, so wie dies bei Firmen der Fall ist, welche eine große Anzahl gleichartiger Fahrzeuge besitzen, wobei beispielsweise aus Auslastungsgründen nicht sichergestellt werden kann, dass der selbe Fahrer immer das selbe Fahrzeug verwendet. In solchen Einsatzbereichen spart ein automatisches Konfigurieren des Fahrzeugs die sonst zum manuellen Konfigurieren notwendige Arbeitszeit, weshalb ein Einsatz eines wie vorangehend beschrieben ausgestalteten Systems erhebliche wirtschaftliche Vorteile mit sich bringt.

Selbstverständlich können auch mehrere Nutzerprofile auf dem Datenspeicher 11 gespeichert werden. Eine Wahl eines Nutzerprofils kann dann beim Einschalten des Dockingterminals erfolgen und nachträglich beim Betrieb auf Wunsch des Nutzers geändert werden.

Zusätzlich zu dem Betriebssystem und den Nutzerprofilen können auch weitere Daten, beispielsweise Tachographendaten, weitere Fahrzeug bezogene Daten, Daten zur Steuerung von weiteren Fahrzeugfunktionen und/oder Treiber und verbesserte Programme für das Steuergerät 1 oder für weitere Steuergeräte 5, auf dem Datenspeicher 11 gespeichert werden.

Vorteilhaft ist ein Zugriff auf den Datenspeicher 11 auch über die USB-Schnittstelle 14, die RJ45-Schnittstelle 15 oder das Chipkartenlesegerät 13 möglich. Hierdurch können beispielsweise verbesserte und/oder erweiterte Steuerbefehle auf dem Dockingterminal installiert werden, welches nachfolgend einen weiter vergrößerten Funktionsumfang aufweist.

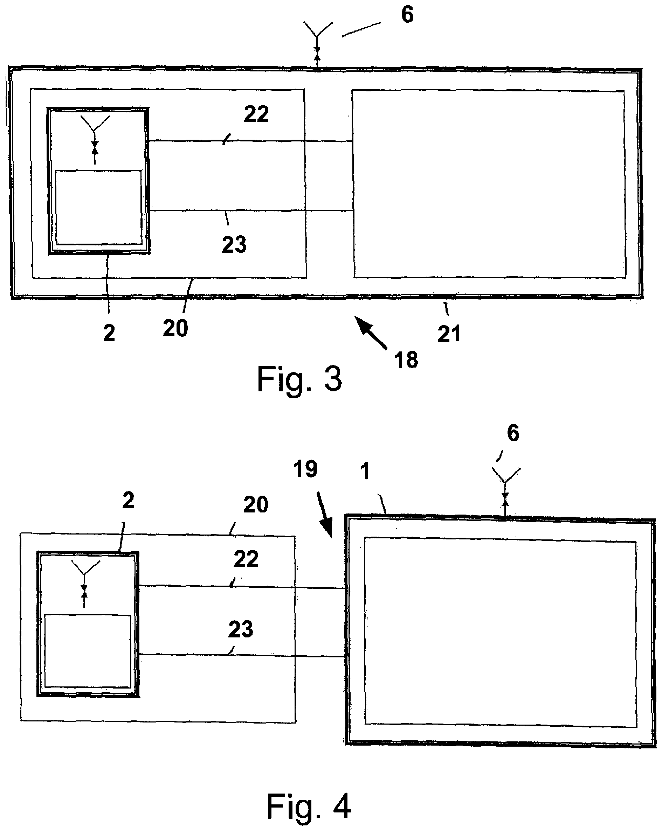

In den in den Figuren 3 und 4 gezeigten Ausführungsformen sind Systeme 18, 19 zur mobilen Ansteuerung von Fahrzeugfunktionen gezeigt. Beide Systeme beinhalten jeweils ein Dockingterminal 20. Die beiden gezeigten Systeme unterscheiden sich dadurch, dass in der in Figur 3 gezeigten Ausführungsform eine im Steuergerät 21 integrierte Dockingterminal 20 verwendet wird, während in Figur 4 eine separate, jedoch über eine Strom- 22 und eine Datenverbindung 23 mit dem Steuergerät 1 verbundene Dockingterminal 21 gezeigt ist.

In beiden Ausführungsformen werden die als Antenne 6 ausgebildeten Mittel zum drahtlosen Datenaustausch beim Einfügen des mobilen Endgerätes in die Dockingterminal 21 automatisch zumindest teilweise deaktiviert, wobei deren Funktion, nämlich das Herstellen einer Verbindung zur Übermittelung von Daten zwischen Dockingterminal 2 und Steuergerät 1, 21, durch die Datenverbindung 23 übernommen wird. Ein zum Verbinden mit einem Mobilfunknetz dienender Teil der Mittel zum drahtlosen Datenaustausch kann aktiviert bleiben. Ist eine außen am Fahrzeug angebrachte Mobilfunkantenne mit dem Steuergerät 1, 21 verbunden kann auch dieser Teil der Mittel zum drahtlosen Datenaustausch deaktiviert werden.

Außerdem werden beim Einfügen des mobilen Endgerätes des Dockingterminals automatisch die im Nutzerprofil gespeicherten Einstellungen an das Steuergerät 21, 1 übermittelt, wodurch das Fahrzeug wie vorangehend beschrieben vorkonfiguriert werden kann.

Zusätzlich kann über das Dockingterminal 20 eine Verbindung mit einer im Fahrzeug vorhandenen Freisprecheinrichtung herstellen, sodass ein separates Dockingterminal für ein Mobiltelefon unnötig wird.

Des Weiteren kann das mobile Endgerät auch einen Zündschlüssel und die Dockingterminal ein Zündschloss ersetzen, derart dass ein Starten des Fahrzeug durch das mobile Endgerät freischaltbar ist, sobald das mobile Endgerät mit das Dockingterminal verbunden wird.

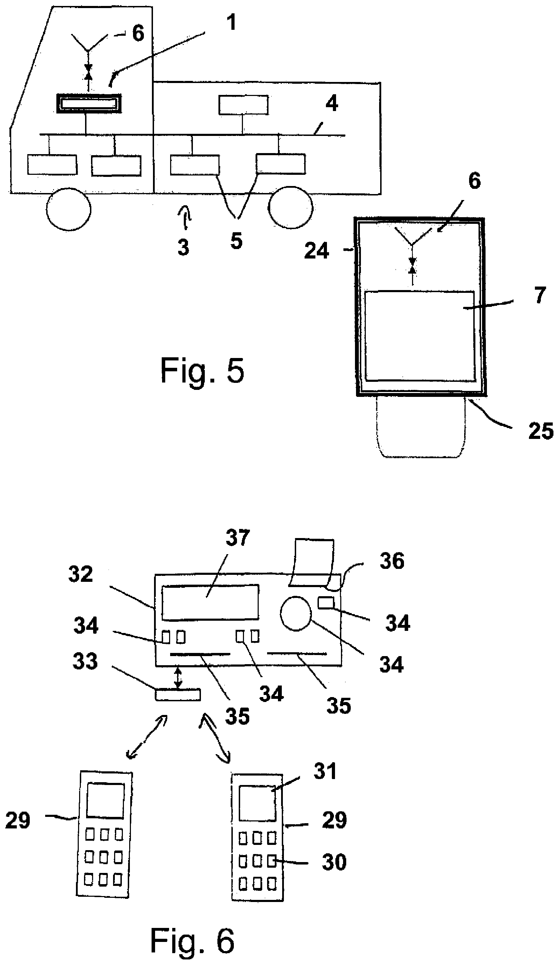

Figur 5 zeigt eine Ausführungsform der Erfindung bei der das Dockingterminal eine zusätzliche Schnittstelle beinhaltet. Im vorliegenden Ausführungsbeispiel ist die zusätzliche Schnittstelle als ISO7816-Schnittstelle 25 zum Lesen und/oder Beschreiben von Chipkarten ausgebildet. Insbesondere können durch die Schnittstelle 25 Fahrerkarten, Kontrollkarten, Bankkarten und/oder Fuhrparkkarten ausgelesen werden. Je nach eingefügter Karte können verschiedene zusätzliche Funktionen ermöglicht werden. Wird eine Fahrerkarte in die Schnittstelle 25 eingefügt kann beispielsweise auf dieselben Fahrer bezogenen Daten zugegriffen werden, die sonst über einen Tachographen bei eingesteckter Fahrerkarte abrufbar währen. Wird eine Bankkarte eingefügt, können Zahlungsvorgänge über das Dockingterminal abgewickelt werden. Bei Ausbildung des Dockingterminals als Mobiltelefon mit Internetzugang oder bei Verwendung in Kombination mit einem Fahrzeug, welches einen drahtlosen Internetanschluss beinhaltet, ist auch mobiles Onlinebanking möglich.

In einer weiteren Ausführungsform wird ein Ansteuern und/oder Konfigurieren bestimmter weiterer Steuergeräte 5 erst durch Einschieben bestimmter Chipkarten in die Schnittstelle 25 ermöglicht. Beispielsweise kann ein Zugriff auf eine Steuerung für einen zum Fahrzeug gehörigen Kranaufbau und/oder Kühlaggregate und/oder Audioanlagen nur dann möglich sein, wenn eine Speziell dazu vorgesehene Chipkarte in die Schnittstelle 25 eingesteckt ist.

Ebenso kann es vorteilhaft sein, dass zum Freischalten jeglicher Steuerungsmöglichkeiten des Dockingterminals 24 eine bestimmte Chipkarte eingesteckt sein muss. Zu diesen Steuermöglichkeiten kann auch die Betätigung einer Schließanlage des Fahrzeugs gehören. Dies ist insbesondere von Vorteil weil hierdurch das Risiko eines Fahrzeugdiebstahls oder unberechtigten Zugriffs auf das Fahrzeug bei Verlust oder Diebstahl des Dockingterminals reduziert wird, da nur mit dem Dockingterminal in Kombination mit der Chipkarte ein Öffnen des Fahrzeugs möglich ist. Alternativ kann ein Einstecken einer bestimmten Chipkarte nur zum Softwareupdate von weiteren Steuergeräten 5 notwendig sein. Ist die eingesteckte Chipkarte personenspezifisch impliziert das Einstecken dieser Chipkarte die Verwendung des Dockingterminals durch eine bestimmte Person. Daher kann dann automatisch ein zu dieser Person gehöriges Nutzerprofil geladen werden. Ein Beispiel einer derart personenspezifischen Chipkarte ist eine Fahrerkarte.

In Figur 6 ist ein weiteres Ausführungsbeispiel eines erfindungsgemäßen Systems dargestellt. Dieses besteht aus zwei Dockingterminals 29, welche ein Eingabefeld 30 und ein Display 31 beinhalten und ansonsten jeweils wie das Dockingterminal aus dem ersten Ausführungsbeispiel ausgebildet sein können, sowie einem aus einem Tachographen 32 und einem mit dem Tachographen 32 über eine K-Linie verbundenen Empfangsmodul 33 bestehenden Steuergerät. Bei dieser Ausführungsform kann es sich bei den Tachographen 32 um einen herkömmlichen Tachographen wie nach dem Stand der Technik bekannt handeln. Alternativ kann ein Tachograph oder Instrumentencluster mit integriertem Empfangsmodul als Steuergerät verwendet werden.

Der Tachograph 32 weist eine Mehrzahl von Bedienelementen 34, Schnittstellen 35 für Fahrer und/oder Fuhrparkkarten, einen Drucker 36 und ein Display 37 auf. Beide Dockingterminals sind jeweils zur Steuerung jeglicher Funktionen des Tachographen 32 ausgebildet und dienen zusätzlich zum Steuern mehrerer weiterer Fahrzeugfunktionen sowie in den vorangehenden Ausführungsbeispielen beschrieben. In diesem Ausführungsbeispiel dient der Tachograph 32 als Server.

Die Eingabefelder 30 der Dockingterminals 29 beinhalten jeweils eine größere Anzahl von Bedienelementen als der Tachograph 32, so dass Tachographenfunktionen durch die Dockingterminals vorteilhaft durch eine verringerte Zahl von Betätigungen von Bedienelementen aufgerufen werden können.

Der im Tachographen 32 integrierte Drucker 36 kann über die Dockingterminal 29 angesteuert werden, wobei auch beliebige nicht den Tachographen betreffende Daten ausgedruckt werden können. Beispielsweise kann über das Dockingterminal eine Selbstüberprüfung einer Mehrzahl von im Fahrzeug verbauten Geräten gestartet werden, wobei die Ergebnisse über den Drucker 36 ausgedruckt werden können.

In der angegeben Zeichnungen Anlage sind beispielhaft verschiedene Ausbauformen einer solchen Architektur dargestellt. Die Realisierung kann in vielen möglichen Zwischenvarianten erfolgen. Zentrales Element ist die feste Fahrzeugschnittstelle mit Anbindung an den Tachograph über eine Automotive-Schnittstelle.

In einer weiteren Ausführungsform ist das Dockingterminal als Remote Keyless Entry ausgeführt und weißt sämtlich in den vorangegangen Ausführungsformen beschrieben Schnittstelle und Sicherung- und Sicherheitskomponenten in integrierter Form auf.

## Patentansprüche

1. Dockingterminal (20) zur Aufnahme eines mobiles Endgerätes, wobei das Dockingterminal (20) Mittel zur Steuerung einer Mehrzahl von Fahrzeugfunktionen eines Kraftfahrzeug (3) über ein mit dem Fahrzeug verbundenes Steuergerät (1) aufweist, und das Dockingterminal (20) Mittel (6) zum drahtlosen Datenaustausch mit einem Steuergerät und eine Eingabevorrichtung (9) und einen Energiespeicher aufweist (11) und dass das Dockingterminal (20) eine Datenverarbeitungseinheit (8) zur kryptologischen Ver- und Entschlüsselung von Daten aufweist,
**dadurch gekennzeichnet, dass** das Dockingterminal (20) als Hotspot in Form eines Wireless Access Point (WAP) in dem Fahrzeug (3) zur drahtlosen Kommunikation fungiert und das Steuergerät (1) derart ausgebildet ist, um abhängig von einer Betätigung der Eingabevorrichtung (9) des Dockingterminals (20) Steuersignale und/oder andere Daten an ein Zielgerät auszugeben.

2. Dockingterminal nach Anspruch 1, **dadurch gekennzeichnet, dass** im Dockingterminal (20) eine Anzeigevorrichtung (31) integriert ist.

3. Dockingterminal nach einem der vorangehenden Ansprüche, **dadurch gekennzeichnet, dass** das Dockingterminal (20) Mittel zur Aufnahme eines externen Datenspeicher aufweist.

4. Dockingterminal nach einem der vorangehenden Ansprüche, **dadurch gekennzeichnet,dass** die Datenverarbeitungseinheit (8) mit mindestens einer im Dockingterminal (20) integrierten zusätzlichen Sicherheitsvorrichtung verbunden ist, wobei die Sicherheitsvorrichtung einen Gehäuseschutz und/oder SmartCard-Controller und/oder einen Fingerabdruckdetektor und/oder Irisscanner aufweist.

5. Dockingterminal nach einem der vorangehenden Ansprüche, **dadurch gekennzeichnet, dass** die Datenverarbeitungseinheit (8) in der Art aufgebaut ist, dass diese zur Ansteuerung und Aktivierung von Funktionen des Bordcomputers und/oder zur Übernahme von Funktionen des Bordcomputers ausgelegt ist.

6. Dockingterminal nach einem der vorangehenden Ansprüche, **dadurch gekennzeichnet, dass** an die Datenverarbeitungseinheit (8) eine im Dockingterminal (20) integrierte Schnittstelle (25) zum Auslesen und/oder Beschreiben von Karten und/oder mobilen Speichermedien angeschlossen ist, welche insbesondere als Leseeinheit zum Lesen von Fahrerkarten ausgebildet sein kann.

7. System zur mobilen Ansteuerung von Fahrzeugfunktionen mit einem Dockingterminal (20) nach einem der Ansprüche 1 bis 8 und einem mit dem Fahrzeug (3) verbundenen oder verbindbaren Steuergerät (1) zum Datenaustausch mit dem Dockingterminal (20) unter Verwendung kryptologischer Verfahren, wobei das Steuergerät (1) zum Ausgeben von Steuersignalen an Zielgeräte abhängig von einer Betätigung des Dockingterminals (20) ausgelegt ist.

8. System nach Anspruch 7, **dadurch gekennzeichnet, dass** das Steuergerät (1) ein Tachograph (32) umfasst.

## Claims

1. Docking terminal (20) for holding a mobile terminal, wherein the docking terminal (20) has means for controlling a plurality of vehicle functions of a motor vehicle (3) via a controller (1) connected to the vehicle, and the docking terminal (20) has means (6) for wireless data interchange with a controller and has an input apparatus (9) and an energy store (11) and wherein the docking terminal (20) has a data processing unit (8) for the cryptological encryption and decryption of data, **characterized in that** the docking terminal (20) acts as a hotspot in the form of a wireless access point (WAP) in the vehicle (3) for the purpose of wireless communication and the controller (1) is designed to take user operation of the input apparatus (9) of the docking terminal (20) as a basis for outputting control signals and/or other data to a target device.

2. Docking terminal according to Claim 1, **characterized in that** a display apparatus (31) is integrated in the docking terminal (20).

3. Docking terminal according to either of the preceding claims, **characterized in that** the docking terminal (20) has means for holding an external data memory.

4. Docking terminal according to one of the preceding claims, **characterized in that** the data processing unit (8) is connected to at least one additional security apparatus integrated in the docking terminal (20), wherein the security apparatus has housing protection and/or a smartcard controller and/or a fingerprint detector and/or an iris scanner.

5. Docking terminal according to one of the preceding claims, **characterized in that** the data processing unit (8) is designed so that it is configured to actuate and activate functions of the onboard computer and/or to undertake functions of the onboard computer.

6. Docking terminal according to one of the preceding claims, **characterized in that** the data processing unit (8) has an interface (25), integrated in the docking terminal (20), connected to it for reading and/or writing to cards and/or mobile storage media, which interface, in particular, may be in the form of a reading unit for reading driver cards.

7. System for mobile actuation of vehicle functions having a docking terminal (20) according to one of Claims 1 to 8 and a controller (1), connected or connectable to the vehicle (3), for data interchange with the docking terminal (20) by using cryptological methods, wherein the controller (1) is designed to output control signals to target devices on the basis of user operation of the docking terminal (20).

8. System according to Claim 7, **characterized in that** the controller (1) comprises a tachograph (32).

## Revendications

1. Terminal d'accueil (20) servant à recevoir un terminal mobile, dans lequel le terminal d'accueil (20) comporte des moyens servant à commander une pluralité de fonctions de véhicule d'un véhicule à moteur (3) par l'intermédiaire d'un appareil de commande (1) relié au véhicule, et le terminal d'accueil (20) comporte des moyens (6) servant à échanger sans fil des données avec un appareil de commande et un dispositif de saisie (9) et un accumulateur d'énergie (11) et le terminal d'accueil (20) comporte une unité de traitement de données (8) servant à chiffrer et déchiffrer des données de manière cryptologique,
**caractérisé en ce que** le terminal d'accueil (20) fonctionne en tant que zone d'accès sous la forme d'un point d'accès sans fil (WAP) dans le véhicule (3) à des fins de communication sans fil et **en ce que** l'appareil de commande (1) est conçu pour délivrer en fonction d'un actionnement du dispositif de saisie (9) du terminal d'accueil (20) des signaux de commande et/ou d'autres données à un appareil cible.

2. Terminal d'accueil selon la revendication 1, **caractérisé en ce qu'**un dispositif d'affichage (31) est intégré au terminal d'accueil (20).

3. Terminal d'accueil selon l'une des revendications précédentes, **caractérisé en ce que** le terminal d'accueil (20) comprend des moyens servant à recevoir une mémoire de données externe.

4. Terminal d'accueil selon l'une des revendications précédentes, **caractérisé en ce que** l'unité de traitement de données (8) est reliée à au moins un dispositif de sécurité supplémentaire intégré au terminal d'accueil (20), dans lequel le dispositif de sécurité comprend un boîtier de protection et/ou un contrôleur de carte à puce et/ou un détecteur d'empreintes digitales et/ou un lecteur d'iris.

5. Terminal d'accueil selon l'une des revendications précédentes, **caractérisé en ce que** l'unité de traitement de données (8) est réalisée de manière à ce qu'elle puisse commander et activer des fonctions de l'ordinateur embarqué et/ou reprendre des fonctions de l'ordinateur embarqué.

6. Terminal d'accueil selon l'une des revendications précédentes, **caractérisé en ce qu'**une interface (25) intégrée au terminal d'accueil (20) est reliée à l'unité de traitement de données (8) pour la lecture et/ou l'écriture de cartes et/ou de supports de mémoire amovibles, laquelle interface peut notamment être réalisée sous la forme d'un lecteur de cartes routières.

7. Système servant à la commande mobile de fonctions de véhicule, comportant un terminal d'accueil (20) selon l'une des revendications 1 à 8 et un appareil de commande (1) relié ou pouvant être relié au véhicule (3) pour échanger des données avec le terminal d'accueil (20) par utilisation de procédés cryptologiques, dans lequel l'appareil de commande (1) est conçu pour délivrer des signaux de commande à des appareils cibles en fonction d'un actionnement du terminal d'accueil (20).

8. Système selon la revendication 7, **caractérisé en ce que** l'appareil de commande (1) comprend un tachygraphe (32) .
